# EUROPEAN PATENT APPLICATION

(11) **EP 1 479 650 A2**
(43) Date of publication of application: **24.11.2004**
(21) Application number: 04011666.7
(22) Date of filing: 17.05.2004
(51) Int. Cl.: C01B 3/48, C01B 3/58, H01M 8/06, B01J 19/24

(54) **Hydrogen generator and fuel cell system**

(30) Priority: 19.05.2003 JP 2003140340
(71) Applicant: MATSUSHITA ELECTRIC INDUSTRIAL CO., LTD., Kadoma-shi, Osaka 571-8501 (JP)
(72) Inventor: Taguchi, Kiyoshi, Osaka-shi Osaka 538-0052 (JP); Ukai, Kunihiro, Ikoma-shi Nara 630-0213 (JP); Wakita, Hidenobu, Yawata-shi Kyoto 614-8363 (JP); Fujihara, Seiji, Amagasaki-shi Hyogo 661-0981 (JP); Kani, Yukimune, Moriguchi-shi Osaka 570-0008 (JP)
(74) Representative: Patentanwälte Leinweber & Zimmermann

(57) **Abstract**

A hydrogen generator comprises a reformer configured to generate a reformed gas containing at least hydrogen and carbon monoxide; a gas supply portion configured to supply an oxidization gas containing oxygen; a purifier configured to reduce a concentration of carbon monoxide contained in the reformed gas in such a manner that a mixture gas containing the reformed gas and the oxidization gas flows through the purifier such that the mixture gas flows through a catalyst body within the purifier to allow the carbon monoxide and the oxygen contained in the mixture gas to react with each other, wherein the purifier has a first catalyst body that selectively oxidizes the carbon monoxide and a second catalyst body which is lower in CO selectivity and lower in temperature of oxidization reaction than the first catalyst body, and the second catalyst body is disposed in parallel with the first catalyst body and on a downstream side of the first catalyst body or adjacent the first catalyst body in a flow of the mixture gas.

## Description

### BACKGROUND OF THE INVENTION

### 1. Field of the Invention

The present invention relates to a hydrogen generator configured to generate a reformed gas to be supplied to a fuel cell, which contains hydrogen as a major component, and a fuel cell system comprising the hydrogen generator.

### 2. Description of the Related Art

As a hydrogen source for use in a fuel cell or the like, a reformed gas obtained from a steam reforming reaction of an organic compound such as hydrocarbon, alcohol, or ether is commonly used. When using the reformed gas as the hydrogen source, in the case of a polymer electrolyte fuel cell operating at low temperatures lower than 100°C, there is a possibility that platinum (Pt) based catalyst used as an electrode of the fuel cell is poisoned by carbon monoxide (CO) contained in the reformed gas. When the Pt based catalyst is poisoned, reaction of hydrogen is obstructed, thereby significantly reducing power generation efficiency of the fuel cell. To avoid this, it is necessary to remove CO contained in the reformed gas to be lower than 100ppm, more preferably lower than 10ppm.

Typically, the following process is conducted to remove CO. First, in a shifter filled with a CO shift catalyst body, CO and a steam are subjected to shift reaction, and converted into carbon dioxide and hydrogen. Thereby, CO concentration of the reformed gas is lowered to approximately several thousands ppm to 1%.

Thereafter, using a minute amount of air, oxygen is added to the reformed gas. And, a CO selective oxidization catalyst body of the hydrogen generator removes the CO contained in the reformed gas to a several ppm level which does not negatively affect the fuel cell.

The CO selective oxidization catalyst body conducts an oxidization reaction by preferentially adsorbing CO higher in adsorbability than hydrogen onto a catalyst surface. In the case of the CO selective oxidization catalyst body, when adsorbability of CO increases, i.e., temperature of the CO selective oxidization catalyst body is relatively low and the CO concentration of the reformed gas is relatively high, CO fully covers the catalyst surface, which significantly reduces reactivity. For example, in the hydrogen generator, if catalysts are not sufficiently increased in temperature and a reformed gas containing high-concentration CO is supplied to the CO selective oxidization catalyst body with low temperature, CO fully covers the catalyst surface. Under this condition, oxidization reaction is difficult to progress even if air is supplied. Since the catalysts are not sufficiently increased in temperature during start of the hydrogen generator, steam contained in the reformed gas condenses on the catalyst body, thereby leading to degraded catalyst, etc.

In order to inhibit the steam from condensing on the catalyst body, there has been proposed a hydrogen generator configured to sufficiently raise temperature of the catalyst using heat from an electric heater.

Since CO removing capability is insufficient only by the CO selective oxidization reaction, there has been disclosed a hydrogen generator intended to improve CO removing ability by providing a catalyst body active in CO methanation on downstream side of the CO selective oxidization catalyst body in the flow of the reformed gas (see Japanese Laid-Open Patent Application Publication No. 2000 - 351608).

Also, there has been disclosed a hydrogen generator provided with a catalyst active at a temperature lower than that of the CO selective oxidization catalyst in a reformed gas introducing portion or in an air supply portion (see Japanese Laid-Open Patent Application Publication No. 11 - 255512).

Also, there has been disclosed a hydrogen generator configured to enhance reactivity under low temperature by improving dispersivity of ruthenium (Ru) carried on a carrier including cerium (Ce) (see Japanese Laid-Open Patent Application Publication No. 2001 - 89101).

Also, there has been disclosed a hydrogen generator provided with a Pt catalyst or a Ru catalyst as high-temperature catalyst on an upstream side in the flow of the reformed gas and Pt/Modenite catalyst as low-temperature catalyst on a downstream side (see Japanese Laid-Open Patent Application Publication No. 2001 - 226107).

Further, there has been disclosed a hydrogen generator comprising a catalyst containing palladium oxide and another noble metal and allowing oxidization reaction at a low temperature to combust off gas remaining unconsumed after reaction in the fuel cell, which is different from the CO selective oxidization reaction (see Japanese Laid-Open Patent Application Publication No. 2002 - 113363).

However, in the case of the hydrogen generator equipped with an electric heater, since the electric heater consumes an electric power, power generation efficiency decreases in a fuel cell system including the hydrogen generator.

In the hydrogen generator provided with the catalyst body active in CO methanation on downstream side of the CO selective oxidization catalyst body in the flow of the reformed gas, when air remaining unconsumed after the reaction in the CO selective oxidization catalyst because of low reactivity in the CO selective oxidization catalyst, is supplied to the CO methanation catalyst body in large amount, carbon dioxide is also methanated, thereby rapidly elevating temperature of the CO methanation catalyst body.

In the hydrogen generator constructed as disclosed in the above-described Publications, sufficient performance is not obtained in the hydrogen generator, for example, selectivity of CO oxidization reaction is low. In particular, in the hydrogen generator disclosed in the Publication No. 11 - 255512, since the catalyst body lower in CO selectivity than the CO selective oxidization catalyst is disposed on upstream side of the CO selective oxidization catalyst, air (oxygen) supplied from an air supply portion is consumed by reaction with hydrogen contained in the reformed gas in the catalyst body low in CO selectivity, so that CO selective oxidization reaction in the CO selective oxidization catalyst body is insufficient. As a result, the CO concentration in the reformed gas cannot be sufficiently reduced.

During start of the hydrogen generator, if oxygen is not consumed in the purifier, the gas returning to the heater increases, thereby causing the reformer to be excessively heated, or oxidization and reduction are repeated in pipings in a subsequent stage of the hydrogen generator, where steam easily condenses, thereby causing corrosion to take place in the pipings.

### SUMMARY OF THE INVENTION

The present invention has been developed under the circumstances, and an object of the present invention is to provide a hydrogen generator capable of quick start, comprising a purifier that can operate stably with high CO selectivity in oxidization reaction.

According to one aspect of the present invention, there is provided a hydrogen generator comprising: a reformer configured to generate a reformed gas containing at least hydrogen and carbon monoxide; a gas supply portion configured to supply an oxidization gas containing oxygen; a purifier configured to reduce a concentration of carbon monoxide contained in the reformed gas in such a manner that a mixture gas containing the reformed gas and the oxidization gas flows through said purifier such that the mixture gas flows through a catalyst body within said purifier to allow the carbon monoxide and the oxygen contained in the mixture gas to react with each other, wherein said purifier has a first catalyst body that selectively oxidizes the carbon monoxide and a second catalyst body which is lower in CO selectivity and lower in temperature of oxidization reaction than said first catalyst body, and said second catalyst body is disposed in parallel with said first catalyst body or on a downstream side of said first catalyst body and adjacent said first catalyst body in a flow of the mixture gas.

In accordance with this construction, during start of the hydrogen generator, even when the CO concentration of the reformed gas is high, oxygen remaining unconsumed after a reaction in the first catalyst body is consumed in the second catalyst body. Since the second catalyst body is located adjacent the first catalyst body, reaction heat in the second catalyst body is quickly transferred to the first catalyst body, it is possible to quickly increase the temperature of the first catalyst body. As a result, it is possible to start the hydrogen generator, and hence a fuel cell system comprising the hydrogen generator, without degrading catalyst activity

Said second catalyst body may be disposed in parallel with said first catalyst body in the flow of the mixture gas.

Said first catalyst body may be formed in a shape of column to extend along the flow of the mixture gas, and said second catalyst body may be formed in a shape of a tube to enclose an outer periphery of said first catalyst body.

Said second catalyst may be disposed downstream of said first catalyst body in the flow of the mixture gas.

Said second catalyst body may be disposed in contact with said first catalyst body.

Said second catalyst body may be disposed adjacent said first catalyst body with a heat conductor disposed between said first and second catalyst bodies.

An upstream portion of a flow path of the mixture gas, a reverse portion of the flow, and a downstream portion of the flow may be formed on one side, on a tip end, and on an opposite side of a separating wall formed by the heat conductor, respectively, and said first catalyst body may be disposed in the upstream portion, and said second catalyst body is disposed in the downstream portion.

Said second catalyst body may be comprised of a carrier containing at least one of cerium and iron, and platinum.

Said second catalyst body may have the carrier and the platinum in a weight ratio ranging from 100 : 0.1 to 100 : 5.

A ratio between a cross-sectional area of said first catalyst body and a cross-sectional area of said second catalyst body may range from 20 : 1 to 5 :1.

Said purifier may be provided with a catalyst body containing ruthenium, rhodium, or nickel as an active component on a downstream side of said second catalyst body in the flow of the mixture gas.

According to another aspect of the present invention, there is provided a fuel cell system comprising the above-described hydrogen generator; and a fuel cell power generation portion configured to generate an electric power using oxidization gas including oxygen and the reformed gas supplied from said hydrogen generator.

The above and further objects and features of the invention will more fully be apparent from the following detailed description with accompanying drawings.

### BRIEF DESCRIPTION OF THE DRAWINGS

Fig. 1 is a block diagram showing a construction of a fuel cell system comprising a hydrogen generator according to a first embodiment of the present invention;
Fig. 2 is a cross-sectional view schematically showing a construction of a purifier of the hydrogen generator in Fig. 1;
Fig. 3 is a graph showing a relationship between CO concentration in a reformed gas and an oxygen conversion temperature in a CO selective oxidization catalyst body and an oxidization removing catalyst body;
Fig. 4 is a graph showing a relationship between a catalyst temperature and a CO concentration in the CO selective oxidization catalyst body and the oxygen removing catalyst body;
Fig. 5 is a cross-sectional view schematically showing a construction of a purifier of a hydrogen generator according to a second embodiment of the present invention;
Fig. 6 is a cross-sectional view schematically showing a construction of a purifier of a hydrogen generator according to a third embodiment of the present invention; and
Fig. 7 is a cross-sectional view schematically showing a construction of a purifier of a hydrogen generator according to a fourth embodiment of the present invention.

### DETAILED DESCRIPTION OF THE PREFERRED EMBODIMENTS

Hereinafter, embodiments of the present invention will be described with reference to the drawings.

### (Embodiment 1)

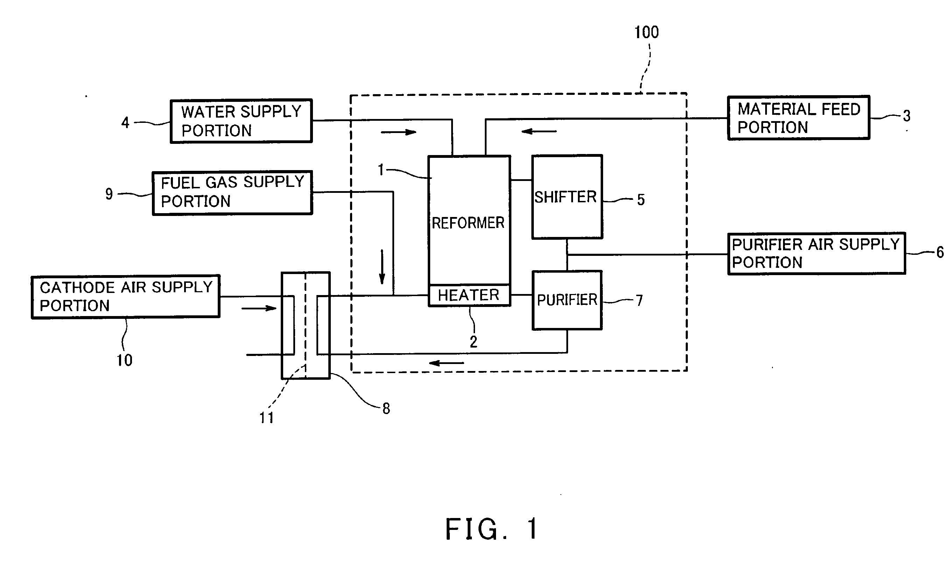

Fig. 1 is a block diagram showing a construction of a fuel cell system including a hydrogen generator according to a first embodiment of the present invention. As shown in Fig. 1, a hydrogen generator 100 of this embodiment includes a reformer 1 configured to generate a reformed gas. A reforming catalyst with Ru carried on alumina is filled in the reformer 1. The reformer 1 is connected to a material feed portion 3 and a water supply portion 4. The material feed portion 3 supplies a feed gas to the reformer 1 and the water supply portion 4 supplies water to the reformer 1.

A heater 2 is provided close to the reformer 1. The heater 2 includes a burner (not shown). A fuel gas is supplied from a fuel gas supply portion 9 to the heater 2 and an off gas to be described later is supplied from a fuel cell power generation portion 8 to the heater 2. In the reformer 1, the feed gas reacts with steam within the reforming catalyst body using heat from the heater 2, to generate the reformed gas.

The reformer 1 is connected to a shifter 5 filled with a shift catalyst with Pt carried on ceria-zirconia complex oxide. The shifter 5 is connected to a purifier 7 constructed as described later. In the shifter 5 and the purifier 7, the CO concentration of the reformed gas generated in the reformer 1 is reduced.

A purifier air supply portion (oxidization gas supply portion) 6 is connected to the purifier 7. Air (oxidization gas) is supplied from the purifier air supply portion 6 to the purifier 7. The purifier 7 converts CO contained in the reformed gas into carbon dioxide using oxygen contained in the air supplied from the purifier air supply portion 6.

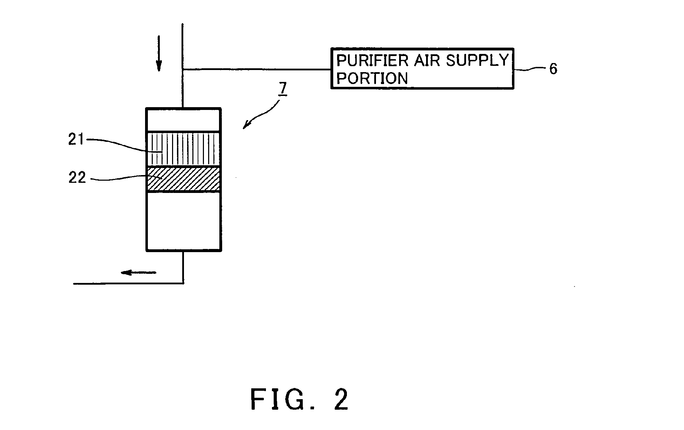

Fig. 2 is a cross-sectional view schematically showing a construction of the purifier 7 included in the hydrogen generator 100 according to the first embodiment. The reformed gas (mixture gas) containing air supplied from the purifier air supply portion 6 is supplied to the purifier 7, and flows therein. The purifier 7 is of a cylindrical shape, and includes a CO selective oxidization catalyst body (first catalyst body) 21 disposed on an upstream side in a flow of the reformed gas, and an oxygen removing catalyst body 22 (second catalyst body (catalyst body used in start of the hydrogen generator)) disposed on downstream side. The CO selective oxidization catalyst body 21 may be structured such that a catalyst with Pt carried on alumina is coated on a cordierite honeycomb. The oxygen removing catalyst body 22 may be structured such that a catalyst with Pt carried on a ceria-zirconia complex oxide is coated on a cordierite honeycomb. The CO selective oxidization catalyst body 21 and the oxygen removing catalyst body 22 may be formed integrally on the same cordierite honeycomb, or on different cordierite honeycombs. When the CO selective oxidization catalyst body 21 is separate from the oxygen removing catalyst body 22, they are desirably in contact with each other or adjacent to each other through a heat conductor, for higher heat conductivity. The CO selective oxidization catalyst body 21 and the oxygen removing catalyst body 22 are each structured such that a weight ratio between noble metal and a carrier is 1:100.

The hydrogen generator 100 constructed as described above is connected to the fuel cell power generation portion 8. The fuel cell power generation portion 8 has a hydrogen-ion permeable electrolyte membrane 11 with electrodes (not shown) applied on both surfaces thereof. The fuel cell power generation portion 8 is configured to generate an electric power using the reformed gas supplied from the purifier 7 of the hydrogen generator 100 and oxygen contained in air (oxidization gas) supplied from a cathode air supply portion 10. Since the fuel cell power generation portion 8 has a known construction, its detail will not be further described.

Subsequently, operations of the hydrogen generator and a fuel cell system comprising the hydrogen generator will be described.

The material supplied from the material feed portion 3 to the hydrogen generator 100 is a natural gas, methanol, gasoline and so forth. A reforming method carried out in the reformer 1 includes steam reforming using steam, or partial reforming using air. Here, it is assumed that the natural gas is supplied from the material feed portion 3 to the reformer 1, which steam-reforms the natural gas to generate the reformed gas.

When the hydrogen generator 100 starts, the water and the natural gas are respectively supplied from the water supply portion 4 and the material feed portion 3 to the reformer 1, and the heater 2 heats the reformer 1. Thereby, the reformed gas is generated in the reformer 1.

An average composition of the reformed gas obtained from steam reforming of the natural gas in the reformer 1, excluding steam, is such that hydrogen is about 80% and carbon dioxide and carbon monoxide are respectively about 10%, although these may vary depending on temperature of a reforming catalyst. The reformed gas having such a composition is supplied from the reformer 1 to the shifter 5.

In the shifter 5, the CO and the steam contained in the reformed gas supplied from the reformer 1 react at a temperature of 150 to 350°C and are converted into hydrogen and carbon dioxide. Thereby, the CO concentration of the reformed gas is lowered to about 0.5 to 1%.

Then, the reformed gas is supplied from the shifter 5 to the purifier 7. At this time, air is supplied from the purifier air supply portion 6 so that oxygen is 0. 5 to 3 times as much as CO contained in the reformed gas. The CO contained in the reformed gas (mixture gas) containing air is removed so that its concentration decreases to a value between 10ppm and 100ppm. The reformed gas from which Co has been sufficiently removed in the purifier 7 is supplied to the fuel cell power generation portion 8.

In the electrolyte membrane 11 of the fuel cell power generation portion 8, oxygen contained in air supplied from the cathode air supply portion 10 reacts with the reformed gas supplied from the purifier 7, thereby generating a D.C. voltage. Hydrogen contained in the reformed gas, which remains in the fuel cell power generation portion 8, is mixed with a fuel gas supplied from the fuel gas supply portion 9, and the resulting mixture gas is supplied to the heater 2 that heats the reformer 1. Typically, the fuel gas supplied from the fuel gas supply portion 9 is identical to the material supplied from the material feed portion 3. Therefore, in this embodiment, the fuel gas is a natural gas.

As described above, when the hydrogen generator 100 starts, the reformed gas is generated in the reformer 1 heated by the heater 2, and flows through the shifter 5 and the purifier 7. At this time, the shifter 5 and the purifier 7 sequentially increase in temperature only by sensible heat of the reformed gas.

When the shifter 5 and the purifier 7 increase in temperature only by the sensible heat of the reformed gas, it takes a considerably long time to increase the temperature of the purifier 7 located closest to an exit of the reformed gas in the hydrogen generator. For this reason, the purifier 7 may be heated by an electric heater or the like, or the purifier 7 may be heated using sensible heat of an exhaust gas discharged from the heater 2. However, since the electric heater consumes a considerable electric power, power generation efficiency in the fuel cell system is reduced. It is therefore desirable to minimize a capacity of the heater. In addition, when using the sensible heat of the exhaust gas, a structure of the gas flow passage becomes complex.

Accordingly, in this embodiment, when the hydrogen generator 100 starts, air is supplied from the purifier air supply portion 6 to the purifier 7, to allow CO and hydrogen contained in the reformed gas to be oxidized to increase the temperature of the purifier 7. By doing so, the gas flow passages do not become complex, and power consumption in the electric heater can be inhibited. Also, air may be supplied to the shifter 5 as in the purifier 7.

Until the temperature of the shifter 5 sufficiently increases, concentration of the CO contained in the reformed gas supplied to the purifier 7 is relatively high. Therefore, oxidization reaction is difficult to progress in the CO selective oxidization catalyst body 21 in the purifier 7. For this reason, steam contained in the reformed gas condenses before CO selective oxidization catalyst body 21 sufficiently increases in temperature. This unfavorably destroy a catalyst structure.

When CO selective oxidization catalyst bodies 21 are provided in plural stages, and purifier air supply portions 6 are correspondingly provided in plural stages, oxygen contained in air supplied from the purifier air supply portion 6 in 1st stage does not react in but passes through the CO selective oxidization catalyst body 21 in 1st stage, and reacts in the CO selective oxidization catalyst body 21 in 2nd stage located downstream, which thereby increases its temperature. In this case, a certain type of the CO selective oxidization catalyst body 21 may degrade capability.

When a catalyst body active in methanation , such as Ru catalyst or the like, is provided on a downstream side of the CO selective oxidization catalyst body 21, the temperature of the catalyst body increases by supplying oxygen, and carbon dioxide contained in the reformed gas in large amount is progressively methanated. This causes a rapid increases in temperature of the purifier 7.

When the reformed gas is not consumed in the purifier 7, heating calories generated in the heater 2 becomes large. It is therefore necessary to reduce the natural gas to be supplied from the material feed portion 3 to the reformer 1. In this case, since sensible heat transferred from the reformer 1 to the shifter 5 and the purifier 7 is reduced, the shifter 5 and the purifier 7 gently increase in temperature. As a result, start time of the hydrogen generator 100 becomes long.

When the purifier 7 is connected to the fuel cell power generation portion 8 through a stainless pipe, corrosion-proof oxidization film formed within the pipings tends to be destroyed if oxidization and reduction are repeated. In particular, corrosion easily takes place in a portion where steam condenses when the fuel cell power generation system starts.

In this embodiment, as described with reference to Fig. 2, the oxygen removing catalyst boy 22 is provided on downstream side of the CO selective oxidization catalyst body 21 in the flow of the reformed gas. By locating the oxygen removing catalyst body 22, oxygen remaining unconsumed after reaction in the CO selective oxidization catalyst body 21 is consumed in the oxygen removing catalyst body 22, when the CO concentration of the reformed gas is high during start of the hydrogen generator 100. In addition, since reaction heat in the oxygen removing catalyst body 22 is transferred to the CO selective oxidization catalyst body 21, the CO selective oxidization catalyst body 21 can quickly increase in temperature. Further, since oxygen is not supplied to the pipings on downstream side of the purifier 7, the pipings are less susceptible to corrosion. As a result, it is possible to inhibit reduction of the catalyst activity and corrosion of the piping. In addition, it is possible to quickly start the hydrogen generator 100, and hence quickly start the fuel cell system.

Subsequently, a detail of the process in the purifier 7 of the hydrogen generator 100 of this embodiment will be described. In the CO selective oxidization catalyst body 21, CO higher in adsorbability than hydrogen adsorbs onto Pt. Oxygen reacts with CO which adsorbs onto Pt. Thus, CO is oxidized while inhibiting reaction of hydrogen. However, CO adsorption onto a Pt surface is noticeable when the concentration of the reformed gas is high or the CO selective oxidization catalyst body 21 has a low temperature. In such a case, adsorption of oxygen is obstructed. Therefore, oxidization reaction of CO as well as reaction of hydrogen is difficult to occur.

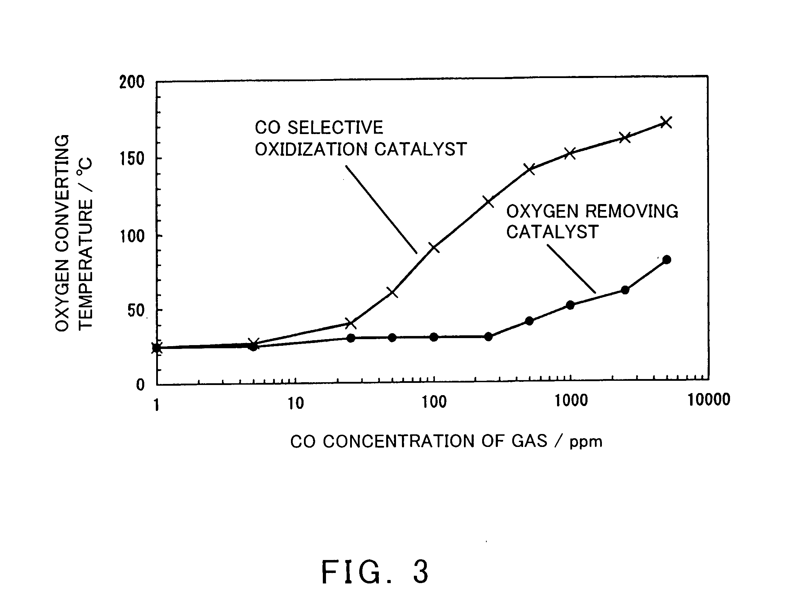

This phenomena will be described with reference to Fig. 3 showing the relationship between CO concentration of the reformed gas and oxygen conversion temperature (temperature at which oxygen concentration is lower than a detectable limit, specifically, lower than about 0.1%) in the CO selective oxidization catalyst body with Pt carried on alumina. Here, air supply amount is set constant so that oxygen concentration is 1%. And, steam is not supplied.

As shown in Fig. 3, in the CO selective oxidization catalyst body, temperature at which oxidization reaction progresses increases with an increase in CO concentration in the gas.

Measurement of oxygen conversion temperature with respect to the CO concentration, for the oxygen removing catalyst with Pt carried on ceria-zirconia carrier used in this embodiment, is shown in Fig. 3.

As shown in Fig. 3, in the case of the oxygen removing catalyst body, an oxidization reaction progresses at low temperatures even when the CO concentration of the gas is high. This is due to the fact that incoming and outcoming of oxygen with respect to the carrier easily takes place because cerium takes a trivalent (III) or tetravalent (IV) electron state. In other words, even when the Pt surface is fully covered with CO, oxygen accumulated in the carrier is supplied, and therefore, CO oxidization reaction easily progresses regardless of obstruction of oxygen adsorption onto the Pt surface.

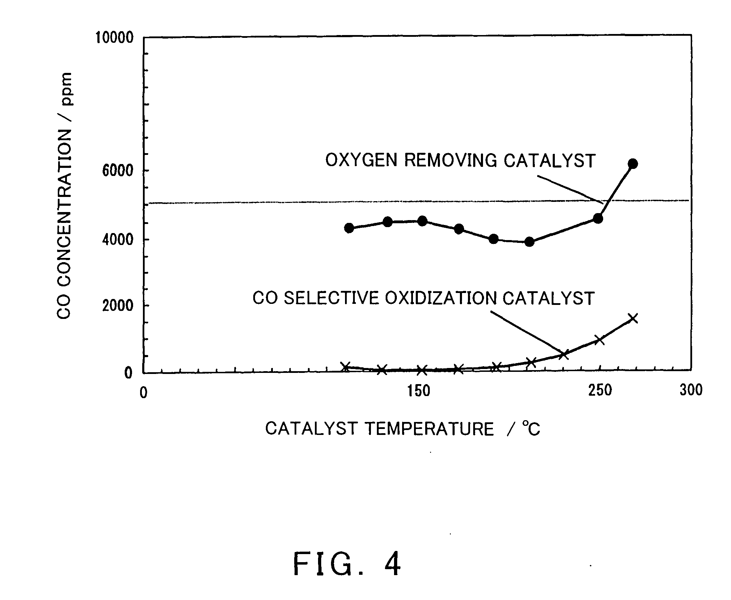

The oxygen removing catalyst is low in selectivity of reaction, and is not effective in selective oxidization reaction of CO. Fig. 4 is a graph showing the relationship between catalyst temperature and CO concentration of the reformed gas in the case where the reformed gas containing CO of 5000 ppm is supplied to the CO selective oxidization catalyst body and the oxygen removing catalyst body. Here, air supply amount is set constant so that oxygen concentration becomes 1%.

As shown in Fig. 4, in the case of the oxygen removing catalyst body, CO is not substantially removed, but hydrogen is mainly oxidized.

In view of the above, it is desirable to pass the reformed gas through the CO selective oxidization catalyst body 21 and then the oxygen removing catalyst body 22. To this end, in this embodiment, the oxygen removing catalyst body 22 is located on downstream side of the CO selective oxidization catalyst body 21 in the flow of the reformed gas within the purifier 7.

With this construction, oxygen remaining unconsumed after reaction in the CO selective oxidization catalyst body 21 is removed by the oxygen removing catalyst body 22. The CO selective oxidization catalyst body 21 can quickly increase in temperature by reaction heat generated in the oxygen removing catalyst body 22 and transferred to the CO selective oxidization catalyst body 21. That is, the purifier 7 can enhance activity at low temperatures without degrading selectivity of the CO oxidization reaction.

Since the oxygen removing catalyst body 22 removes oxygen remaining unconsumed after the reaction in the CO selective oxidization catalyst body 21, it is possible to avoid the problems caused by an event that oxygen remains unconsumed in the purifier, i.e., problems that heating calories in the reformer becomes excessive due to an increase in the gas returning to the heater, or corrosion takes place after oxidization and reduction repeats in the piping located in a subsequent stage of the hydrogen generator, where steam easily condenses.

While in this embodiment, Pt is used as noble metal in the CO selective oxidization catalyst body 21 and the oxygen removing catalyst body 22, and the amount of carried Pt is 1 wt-%, the amount of carried noble metal may be set so that noble metal has high dispersivity and exhibits desired activity. When the content of noble metal is higher, particles of the noble metal becomes larger, and thereby noble metal which does not contribute to reaction increases. On the contrary, when the content of the noble metal is low, sufficient activity is not gained. In view of these, it is desired that the catalyst carrier and the noble metal are approximately 100 : 0.1 to 100:5 in weight ratio, as in the usual noble metal catalyst for combustion or for purifying an exhaust gas.

While the CO selective oxidization catalyst body 21 is structured such that Pt is carried on alumina in this embodiment, the same effects can be obtained by using a catalyst containing Ru or Pt-Ru alloy generally used as CO selective oxidization catalyst as an active component. As the carrier, silica, silicaalumina, zeolite or the like, which is highly heat resistive and stable under reformed gas atmosphere, may be used, other than alumina.

While the oxygen removing catalyst 22 is structured such that Pt is carried on the ceria-zirconia carrier, a material which allows incoming and outcoming of oxygen with respect to the carrier and is resistive under reformed gas atmosphere of approximately 20°C or lower, may be used. Therefore, the effects are obtained by using a carrier with cerium or zirconia added on a stable carrier made of silica, alumina, silicaalumina, zeolite, or the like.

Also, in this embodiment, CO selective oxidization catalyst bodies 21 may be provided in plural stages, and the purifier air supply portions 6 may be correspondingly provided in plural stages, as described above.

### (Example 1)

1 wt- % of Pt was carried on each of alumina and ceria-zirconia complex oxide and calcined at 500°C in air. Alumina zol and pure water were added to these and made into slurries, which were coated on a cordierite honeycomb, thus forming the CO selective oxidization catalyst body 21 and the oxygen removing catalyst body 22. These catalyst bodies 21 and 22 were installed in the purifier 7 as shown in Fig. 2. In addition, the reformer 1 was filled with a reforming catalyst with Ru carried on alumina and the shifter 5 was filled with a shift catalyst with Pt carried on the ceria-ziruconia complex oxide.

In the hydrogen generator 100 constructed as described above, first of all, a city gas was supplied from the fuel gas supply portion 9 to the heater 2. The heater 2 started heating the reformer 1. Then, a city gas from which sulfur was removed was supplied from the material feed portion 3 to the reformer 1 at a flow rate of 4 liters per minute as a feed gas, and water three times in molar ratio as much as carbons in the city gas was supplied from the water supply portion 4 to the reformer 1. Air was supplied from the purifier air supply portion 6 to the purifier 7 at a rate of 1 liter per minute.

As a result of operation of the hydrogen generator 100 as described above, the reformed gas was generated in the reformer 1 and flowed through the shifter 5 and then the purifier 7. At this time, CO concentration of the reformed gas that has passed through the purifier 7 was continuously measured by a CO concentration meter. And, time required from when the heater 2 started heating the reformer 1 until the CO in the reformed gas was lowered to less than 100ppm (hereinafter referred to as a start time) was measured. The measurement was 30 minutes.

### (Comparison 1)

In comparison 1, a hydrogen generator was constructed such that the oxygen removing catalyst body 22 was excluded from the purifier 7 of the example 1. In the hydrogen generator of the comparison 1, start time was measured as in the example 1. The measurement was 40 minutes.

As should be appreciated from the above, when the oxygen removing catalyst body 22 is provided downstream of the CO selective oxidization catalyst body 21, the start time can be significantly reduced in contrast to the case where the oxygen removing catalyst body 22 is not provided.

### (Example 1 - 2)

In this embodiment, the oxygen removing catalyst body 22 was produced using each of ceria and iron oxide as a carrier, instead of the ceria-zirconia complex oxide. And, the hydrogen generator 100 was operated as in the example 1, and the start time was measured. As a result, the start time was 22 minutes.

As should be appreciated from the above, when using ceria or iron oxide as a carrier of the oxygen removing catalyst body 22, the start time can be reduced as in the case of using the ceria-zirconia complex oxide.

### (Embodiment 2)

A hydrogen generator according to a second embodiment of the present invention is constructed such that a CO methanation catalyst body is provided downstream of the oxygen removing catalyst body within the purifier. Since the other construction is identical to that of the first embodiment, its description is omitted.

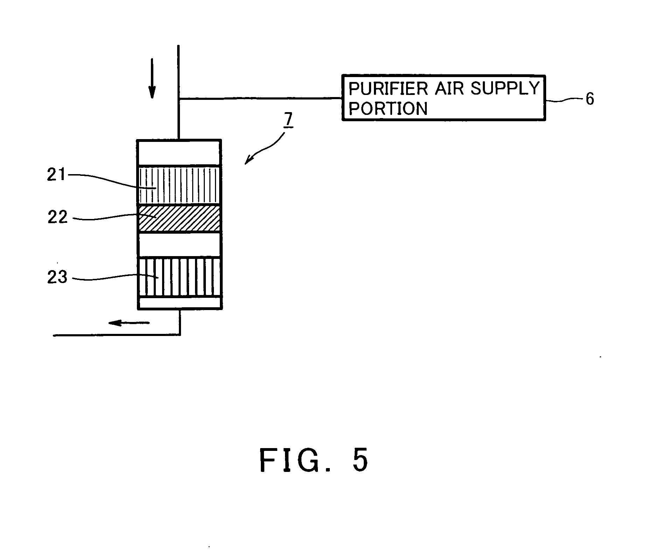

Fig. 5 is a cross-sectional view schematically showing a construction of the purifier of the hydrogen generator according to the second embodiment of the present invention. With reference to Figs. 1 and 5, the purifier 7 is cylindrical, and the CO selective oxidization catalyst body 21, the oxygen removing catalyst body 22, and the CO methanation catalyst body 23 are arranged in this order within the purifier from upstream side. The CO methanation catalyst body 23 has a function of removing CO in the reformed gas by converting CO and hydrogen into methane. Here, the CO methanation catalyst body 23 may be structured such that Ru carried on alumina is coated on the cordierite honeycomb. The CO selective oxidization catalyst body 21 and the oxygen removing catalyst body 22 are similar to those of the first embodiment.

As can be seen from Fig. 4, in the CO selective oxidization catalyst body 21, CO concentration becomes higher a little bit in a high-temperature region. This is because a reverse shift reaction in which carbon dioxide and hydrogen are converted into CO and steam is facilitated in the high-temperature region, and selectivity of CO oxidization reaction becomes low in the high-temperature region.

In this embodiment, in the purifier 7, the CO methanation catalyst body 23 is located downstream of the CO selective oxidization catalyst body 21 in the flow of the reformed gas. In this construction, even when CO is not sufficiently removed in the CO selective oxidization catalyst body 21, the CO methanation catalyst body 23 is capable of removing CO of approximately 100 to 1000ppm by converting CO into methane. Thereby, CO concentration of the reformed gas can be lowered to several ppm in a wider temperature range.

In general, when a temperature of the CO methanation catalyst exceeds a range of 200 to 300°C, methanation of carbon dioxide, i.e., an exothermic reaction, progresses, so that temperature greatly rises. Under this condition, temperature control becomes difficult, and the catalyst may be degraded under excessively high temperature condition.

The Ru catalyst tends to be degraded if oxygen is supplied at a high temperature. In general, the Ru catalyst is degraded significantly when oxidized and reduced repeatedly at a temperature higher than 350°C. Further, since the Ru catalyst is highly active in oxidization reaction, hydrogen or CO reacts with oxygen, thereby resulting in increased temperature.

During start of the hydrogen generator, oxidization reaction is difficult to occur in the CO selective oxidization catalyst body 21 because of high CO concentration of the reformed gas supplied to the purifier 7. For this reason, oxygen remaining unconsumed after the reaction reacts in the CO methanation catalyst body 23 when the oxygen removing catalyst body 22 is not provided, thereby resulting in a temperature increase. In this case, depending on conditions, carbon dioxide is progressively methanated, thereby leading to excessively increased temperature.

In this embodiment, however, since the oxygen removing catalyst body 22 is provided downstream of the CO selective oxidization catalyst body 21 in the purifier 7, oxygen can be removed during start of the hydrogen generator when CO concentration of the reformed gas is high. Therefore, even when the Ru catalyst is provided as the CO methanation catalyst body 23 on downstream side of the CO selective oxidization catalyst body 21, it is possible to inhibit temperature increase and catalyst degradation of the catalyst 23, because oxygen is not supplied to the CO methanation catalyst body 23.

In place of the Ru catalyst, other catalysts such as rhodium (Rh) or Nickel (Ni) , which are active in CO methanation, may be used as the CO methanation catalyst body 23.

### (Example 2)

Ru was carried on alumina at an amount of 1 wt-%, and the alumina carrying Ru thereon was calcined at 300°C in air. Alumina sol and pure water were added to the alumina and made into a slurry, which was coated on a cordierite honeycomb, thus producing the CO methanation catalyst body 23. The CO selective oxidization catalyst body 21 and the oxygen removing catalyst body 22 were produced as in the example 1.

The hydrogen generator 100 constructed as described above was operated as in the example 1, and start time was measured. The measurement was 29 minutes. And, the temperature of the CO methanation catalyst body 23 was 200°C .

### (Comparison 2)

In a comparison 2, a hydrogen generator was constructed such that the oxygen removing catalyst body 22 was excluded from the purifier 7 in the example 2. The hydrogen generator of the example 2 was operated as in the example 2. As a result, temperature of the CO methanation catalyst body 23 increased up to 350°C, and did not decrease for one hour. Further, under this condition, start time was measured and measurement was 150 minutes. The reason why the start time in the comparison 2 was longer than that in the example 2 was that it took considerable time to lower the temperature of the CO methanation catalyst body 23 to about 200°C.

While the CO selective oxidization catalyst body 21 is cylindrical, this may be rectangular column.

### (Comparison 3)

In the example 2, an electric heater of 100W is provided to heat the purifier 7. In the same manner, the start time was measured and measurement was 25 minutes. As should be appreciated from the above results, when the oxygen removing catalyst body 22 is provided between the CO selective oxidization catalyst body 21 and the CO methanation catalyst body 23, temperature increase in the CO methanation catalyst body 23 which would otherwise occur can be avoided, and start time can be reduced.

### (Embodiment 3)

A hydrogen generator according to a third embodiment of the present invention is constructed such that an oxygen removing catalyst body is provided on an outer peripheral portion of a CO selective oxidization catalyst body within a purifier. The other construction is identical to that in the second embodiment, and therefore will not be further described.

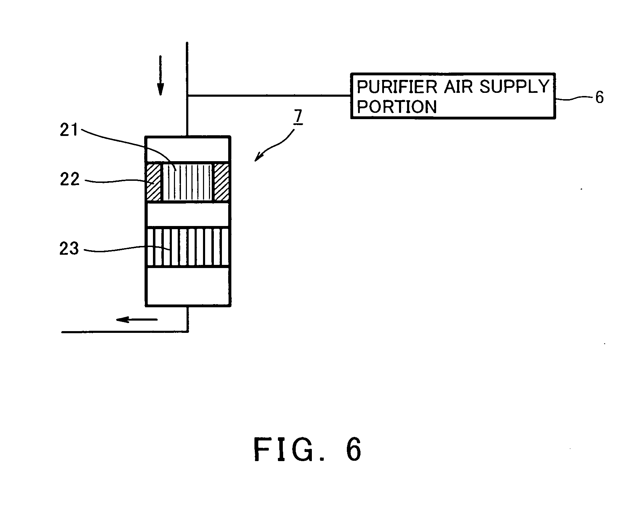

Fig. 6 is cross-sectional view schematically showing a construction of the purifier 7 of the hydrogen generator according to the third embodiment of the present invention. With reference to Figs. 1 and 6, the purifier 7 is cylindrical and is comprised of the CO selective oxidization catalyst body 21, the oxygen removing catalyst body 22 disposed to enclose an outer periphery of the CO selective oxidization catalyst body 21, and the CO methanation catalyst body 23 disposed downstream of the catalysts 21 and 22 in the flow of the reformed gas.

The oxygen removing catalyst body 22 is produced by impregnating a cerium nitrate solution in an outer peripheral portion of the CO selective oxidization catalyst body 21. The CO selective oxidization catalyst body 21 and the CO methanation catalyst body 23 are produced in the same manner as described in the second embodiment.

In the case of the cylindrical honeycomb catalyst, since heat dissipates significantly in the peripheral portion, temperature distribution occurs in the peripheral portion and the center portion, for example, temperature decreases in the peripheral portion. Also, during start of the hydrogen generator, temperature rises slowly in the peripheral portion of the honeycomb catalyst. As a result, the start time of the hydrogen generator becomes long. On the other hand, in this embodiment, in the cylindrical honeycomb catalyst provided with the oxygen removing catalyst 22 on the peripheral portion of the CO selective oxidization catalyst body 21, oxidization reaction progresses irrespective of the CO concentration, thereby resulting in a quick rise in temperature.

When a ratio of the oxygen removing catalyst body 22 to the CO selective oxidization catalyst body 21 (ratio in a cross-sectional area of honeycomb) is higher, the CO concentration of the reformed gas flowing through the CO methanation catalyst body 23 becomes higher. This is because the CO concentration of the reformed gas is not substantially reduced in the oxygen removing catalyst body 22. For example, when a ratio of the oxygen removing catalyst body 22 to the CO selective oxidization catalyst body 21 is 1:10 and CO concentration of the reformed gas flowing through the CO selective oxidization catalyst body 21 and the oxygen removing catalyst body 22 is 5000ppm, the CO concentration of the reformed gas after the reaction is about 500ppm. When the ratio of the oxygen removing catalyst body 22 to the CO selective oxidization catalyst body 21 is 1:5 and CO concentration of the reformed gas is about 5000ppm, the CO concentration of the reformed gas after the reaction is about 1000ppm.

The ratio of the oxygen removing catalyst body 22 to the CO selective oxidization catalyst body 21 is determined in view of the capability of the CO methanation catalyst body 23 located downstream. Desirably, approximately 1:20 to 1:5 is set. The reason is as follows. When the ratio is less than 1:20, effects obtained by installing the oxygen removing catalyst body 22 is little. On the other hand, when the ratio is more than 1:5, the CO concentration of the reformed gas exceeds 1000ppm. As a result, when the capability of the CO methanation catalyst body 23 on downstream side is low, the CO concentration of the reformed gas discharged from the purifier 7 cannot be sufficiently reduced.

While the oxygen removing catalyst body 22 is provided evenly on the peripheral portion of the CO selective oxidization catalyst body 21 in this embodiment, selectivity of CO oxidization reaction can be increased by forming the oxygen removing catalyst body 22 only in a downstream region of the peripheral portion of the body 21.

### (Example 3)

The oxygen removing catalyst body 22 was produced by impregnating a cerium nitrate solution in an outer peripheral portion of the CO selective oxidization catalyst body 21 so that the ratio of the oxygen removing catalyst body 22 to the CO selective oxidization catalyst body 21 is 3:100, 1:20, 1:10, 1:5, and 3:10

The hydrogen generator 100 constructed as described above was operated as in the example 1, and start time of the hydrogen generator 100 was measured. As a result, the start time was 40 minutes when the ratio of the oxygen removing catalyst body 22 to the CO selective oxidization catalyst body 21 was 3:100, the start time was 25 minutes when the ratio was 1:20, the start time was 20 minutes when the ratio was 1:10, and the start time was 18 minutes when the ratio was 1:5. When the ratio was 3:10, the hydrogen generator was not able to start because the CO in the reformed gas did not become less than 100ppm. When the ratio was 3:10, CO in the reformed gas became stable at 1500ppm.

While in this embodiment, the purifier 7 is provided with the CO methanation catalyst body 23, the CO methanation catalyst body 23 may be alternatively omitted. That is, the purifier 7 may be provided with only the oxygen removing catalyst body 22 and the CO selective oxidization catalyst body 21 covered with the oxygen removing catalyst body 22.

### (Embodiment 4)

A hydrogen generator according to a fourth embodiment of the present invention is constructed such that a separating wall is provided in an internal space of the purifier 7 to define a bent flow passage of the reformed gas (mixture gas) in the internal space of the purifier 7. In the flow passage, the oxygen removing catalyst body is disposed to enclose the outer periphery of the CO selective oxidization catalyst body with the separating wall disposed between them. The construction other than the purifier is identical to that of the second embodiment, and will not be further described.

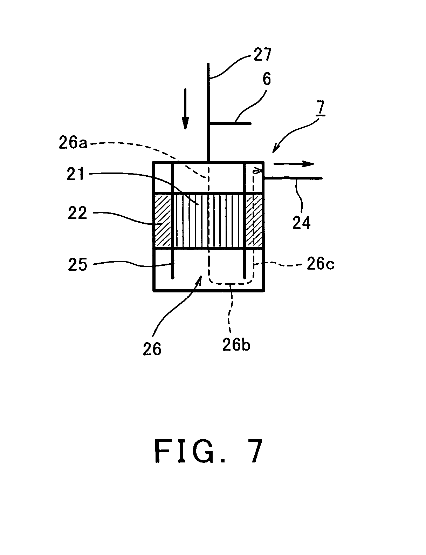

Fig. 7 is a cross-sectional view schematically showing a construction of the purifier of the hydrogen generator according to a fourth embodiment of the present invention. With reference to Figs. 1 and 7, the purifier 7 is cylindrical, and a circular-cylindrical separating wall 25 protrudes from a ceiling face of an outer wall (wall of a reactor) of the purifier 7. The separating wall 25 is formed by a heat-conductive stainless plate. The separating wall 25 is provided coaxially with an outer wall of the purifier 7 so as to have a gap between a lower end of the wall 25 and a bottom face of the outer wall of the purifier 7. And, a reformed gas inlet 27 is connected to an upper end of a center portion of the purifier 7 defined by the separating wall 25. The purifier air supply portion 6 is connected to the reformed gas inlet 27. A reformed gas outlet 24 is provided at an upper end of the peripheral portion of the purifier 7 defined by the separating wall 25. In this structure, a flow passage 26 of the reformed gas (mixture gas) containing air is formed within the purifier 7 so that the gas flows into the inlet 27, and through the center portion of the purifier 7, reverses its direction at the lower end of the separating wall 25, flows through the peripheral portion of the purifier 7, and exits from the outlet 24. And, the CO selective oxidization catalyst body 21 is provided at the center portion of the purifier 7. The cylindrical oxygen removing catalyst body 22 is provided to enclose the outer periphery of the CO selective oxidization catalyst body 21 with the separating wall 25 disposed between the catalysts 21 and 22. In other words, inside the purifier 7, an upstream portion 26a, a reverse portion 26b, and a downstream portion 26c of the flow passage 26 of the reformed gas (mixture gas) are formed on one side, at a tip end, and on an opposite side of the heat-conductive separating wall 25. The CO selective oxidization catalyst body 21 is disposed in the upstream portion 26a, and the oxygen removing catalyst body 22 (catalyst used in start of the generator) is disposed on the downstream portion 26c.

The oxygen removing catalyst body 22 is structured such that Pt is carried on a carrier formed by a ceria-zirconia complex oxide molded in the shape of a sphere having a diameter of 3mm. As in the first embodiment, the CO selective oxidization catalyst body 21 is structured such that Pt is carried on the carrier made of alumina.

In the purifier 7 constructed as described above, the reformed gas (mixture gas) containing air flows from the inlet 27 into the center portion of the purifier 7, and passes through the CO selective oxidization catalyst body 21. Then, the gas flows in a reverse direction at the lower end of the separating wall 25 and passes through the oxygen removing catalyst body 22 and exits from the outlet 24. As described in the first embodiment, since the CO concentration of the reformed gas is high during start of the hydrogen generator 100, oxidization reaction progresses mainly in the oxygen removing catalyst body 22, which thereby generates heat. In this embodiment, since the oxygen removing catalyst body 22 is disposed so as to enclose the outer periphery of the CO selective oxidization catalyst body 21 with the heat-conductive separating wall 25 disposed between the catalysts 21 and 22, heat generated in the oxygen removing catalyst body 22 is quickly transferred to the CO selective oxidization catalyst body 21 through the separating wall 25, and thereby, the start time of the hydrogen generator 100 is reduced. While in this embodiment, a reactor forming the purifier 7 and the separating wall 25 are made of stainless, the separating wall 25 may be made of a material having heat conductivity approximately as high as that of stainless and sufficient durability in environment.

### (Example 4)

The oxygen removing catalyst body 21 was produced by carrying Pt on a ceria-zirconia complex oxide molded in the shape of sphere having a diameter of 3mm at an amount of 1 wt-% and by calcining the resulting carrier at 500°C in air. The oxygen removing catalyst body 21 was filled in the region between the separating wall 25 and the side face in an internal space of the purifier 7. The CO selective oxidization catalyst body 21 was produced as in the example 1.

The hydrogen generator constructed as described above was operated as in the example 1, and the start time was measured. The measurement was 22 minutes.

As should be appreciated from the foregoing, by disposing the oxygen removing catalyst body 22 downstream of the CO selective oxidization catalyst body 21 to enclose the CO selective oxidization catalyst body 21 with the heat-conductive separating wall 25 disposed between the catalyst bodies 21 and 22, the start time of the hydrogen generator can be reduced.

As thus far described, in accordance with the hydrogen generator and the fuel cell system having the hydrogen generator of the present invention, the start time of the generator and the system can be reduced. The fuel cell system capable of reducing start time is very effective when applied to small-scale power generation equipment in which the fuel cell system is installed at home, because start and stop must frequently occur in such small-scale power generation equipment.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention and all modifications which come within the scope of the appended claims are reserved.

## Claims

1. A hydrogen generator comprising:
a reformer configured to generate a reformed gas containing at least hydrogen and carbon monoxide;
a gas supply portion configured to supply an oxidization gas containing oxygen;
a purifier configured to reduce a concentration of carbon monoxide contained in the reformed gas in such a manner that a mixture gas containing the reformed gas and the oxidization gas flows through said purifier such that the mixture gas flows through a catalyst body within said purifier to allow the carbon monoxide and the oxygen contained in the mixture gas to react with each other,
wherein
said purifier has a first catalyst body that selectively oxidizes the carbon monoxide and a second catalyst body which is lower in CO selectivity and lower in temperature of oxidization reaction than said first catalyst body, and
said second catalyst body is disposed in parallel with said first catalyst body or on a downstream side of said first catalyst body and adjacent said first catalyst body in a flow of the mixture gas.

2. The hydrogen generator according to Claim 1, wherein said second catalyst body is disposed in parallel with said first catalyst body in the flow of the mixture gas.

3. The hydrogen generator according to Claim 2, wherein said first catalyst body is formed in a shape of column to extend along the flow of the mixture gas, and said second catalyst body is formed in a shape of a tube to enclose an outer periphery of said first catalyst body.

4. The hydrogen generator according to Claim 1, wherein said second catalyst is disposed downstream of said first catalyst body in the flow of the mixture gas.

5. The hydrogen generator according to Claim 1, wherein said second catalyst body is disposed in contact with said first catalyst body.

6. The hydrogen generator according to Claim 1, wherein said second catalyst body is disposed adjacent said first catalyst body with a heat conductor disposed between said first and second catalyst bodies.

7. The hydrogen generator according to Claim 6, wherein an upstream portion of a flow path of the mixture gas, a reverse portion of the flow, and a downstream portion of the flow are formed on one side, on a tip end, and on an opposite side of a separating wall formed by the heat conductor, respectively, and said first catalyst body is disposed in the upstream portion, and said second catalyst body is disposed in the downstream portion.

8. The hydrogen generator according to Claim 1, wherein said second catalyst body is comprised of a carrier containing at least one of cerium and iron, and platinum.

9. The hydrogen generator according to Claim 8, wherein said second catalyst body has the carrier and the platinum in a weight ratio ranging from 100 : 0.1 to 100 : 5.

10. The hydrogen generator according to Claim 3, wherein a ratio between a cross-sectional area of said first catalyst body and a cross-sectional area of said second catalyst body ranges from 20 : 1 to 5 :1.

11. The hydrogen generator according to Claim 1, wherein said purifier is provided with a catalyst body containing ruthenium, rhodium, or nickel as an active component on a downstream side of said second catalyst body in the flow of the mixture gas.

12. A fuel cell system comprising
a hydrogen generator including:
a reformer configured to generate a reformed gas containing at least hydrogen and carbon monoxide;
a gas supply portion configured to supply an oxidization gas containing oxygen;
a purifier configured to reduce a concentration of carbon monoxide contained in the reformed gas in such a manner that a mixture gas containing the reformed gas and the oxidization gas flows through said purifier such that the mixture gas flows through a catalyst body within said purifier to allow the carbon monoxide and the oxygen contained in the mixture gas to react with each other,
wherein
said purifier has a first catalyst body that selectively oxidizes the carbon monoxide and a second catalyst body which is lower in CO selectivity and lower in temperature of oxidization reaction than said first catalyst body, and
said second catalyst body is disposed in parallel with said first catalyst body and on downstream side of said first catalyst body and adjacent said first catalyst body in a flow of the mixture gas; and
a fuel cell power generation portion configured to generate an electric power using oxidization gas including oxygen and the reformed gas supplied from said hydrogen generator.
